# EUROPÄISCHE PATENTSCHRIFT

(11) **EP 0 752 575 B1**
(45) Veröffentlichungstag und Bekanntmachung des Hinweises auf die Patenterteilung: **07.08.2002**
(21) Anmeldenummer: 96107329.3
(22) Anmeldetag: 09.05.1996
(51) Int. Cl.: G01G 3/14, G01L 1/22

(54) **Wägezelle**
Load cell
Capteur de pesage

(30) Priorität: 07.07.1995 DE 29510678 U
(43) Veröffentlichungstag der Anmeldung: 08.01.1997
(73) Patentinhaber: Hottinger Baldwin Messtechnik GmbH, 64293 Darmstadt (DE)
(72) Erfinder: Gerlach, Hans-Joachim, 64739 Höchst (DE); Wägner, Ralf, 65468 Trebur (DE); Will, Heinz Ronald, 64665 Alsbach (DE)
(74) Vertreter: Behrens, Helmut, Dipl.-Ing.

(56) Entgegenhaltungen:
- EP-A- 0 307 998
- DE-A- 4 009 286
- GB-A- 626 206
- US-A- 3 911 737

## Beschreibung

Die Erfindung betrifft eine stabförmige Wägezelle gemäß dem Oberbegriff des Patentanspruchs 1.

Eine derartige Wägezelle ist aus der EP 0 315 846 B1 bekannt. Dabei handelt es sich um einen hantelförmig ausgebildeten Stab mit einem schlanken Zentrumsteil und wesentlich dickeren Endbereichen, wobei die Dehnungsmeßstreifen einschließlich Sensoren zur Linearisierung der Meßwerte und zur Temperaturkompensation etwa in der Mitte des Zentrumsteils angeordnet sind. Die bekannte Wägezelle ist selbstaufrichtend, d.h. die endseitigen Krafteinleitungsflächen sind so ausgeführt, daß zwangsläufig ein Rückstellmoment erzeugt wird, wenn die Wägezelle aus einer senkrechten Lage ausgelenkt wird. Der gesamte Zentrumsteil wird von einem Wellrohr überdeckt, das endseitig mit den dickeren Endbereichen der Wägezelle verbunden ist. Außerdem ist in einem Endbereich eine Querbohrung vorgesehen, die über dünnere Bohrungen mit der Oberfläche des Zentrumsteils verbunden ist und zur Aufnahme der von den Sensoren abgehenden Kabel bestimmt ist. Um die Beanspruchungen in der Wägezelle symmetrisch zu halten, ist es darüberhinaus erforderlich, weitere, für Verkabelungen nicht erforderliche Bohrungen im anderen Endbereich vorzusehen.

Diese bekannte Wägezelle ist in der Herstellung sehr aufwendig und teuer und daher in vielen Anwendungsfällen nicht wettbewerbsfähig, bei denen es vor allem auf einen robusten Aufbau und weniger auf höchste Meßempfindlichkeit und -genauigkeit ankommt. Insbesondere auch die Abdeckung mittels Wellrohr ist herstellungstechnisch kompliziert, weil sie nur realisierbar ist, wenn die zu verbindenden Bauteile maßlich genau aufeinander abgestimmt sind.

Es sind weitere Bauformen von in der Funktion vergleichbaren selbstaufrichtenden Wägezellen bekannt, die ebenfalls aufwendige Gehäuse aufweisen. Bei der in der Firmendruckschrift "Wägezelle Reihe K, 7MH 3105, Betriebsanleitung" der Firma Siemens AG beschriebenen Wägezelle ist ein zweiteiliges Stahlblechgehäuse mit einer O-Ring Dichtung vorgesehen.

Aus der EP 0 307 998 A2 ist ein Kraftaufnehmer bekannt, der über einen sich axial erstreckenden zylindrischen Stauchkörper verfügt, an dessen Enden abgerundete Kraftein- und Kraftausleitungsflächen angeordnet sind. Etwa axial in der Mitte des Stauchkörpers ist quer zur Axialrichtung eine groß dimensionierte Durchgangsbohrung vorgesehen, die durch zwei gegenüberliegend angeordnete scheibenförmige Trägerplatten abgedichtet ist. Dabei sind an der nach innen gerichteten ebenen Oberfläche jeder Trägerscheibe Dehnungsmeßstreifen in Schichttechnik aufgebracht. Die Trägerscheiben sind durch eine Schweiß- oder Lötverbindung parallel zueinander in den beiden gegenüberliegenden Bohrungsöffnungen befestigt und verschließen diese, so daß die Dehnungsmeßstreifen gegen Korrosion geschützt sind. Da die zu messende Kraft hauptsächlich über die Trägerplatten übertragen wird, hängt die Haltbarkeit und Dichtigkeit der Trägerplatten stark von der Güte der Schweiß- oder Lötverbindung ab, mit der die Trägerplatten mit dem Stauchkörper verbunden sind.

Aus der EP 0 107 966 B1 ist eine Lastmeßzelle bekannt, bei der die Dehnungsmeßstreifen mittels einer aufgeklebten Aluminiumverbundfolie abgedeckt sind. Derartige Abdeckungen haben zwar praktisch keinen Einfluß auf die Federkennlinie der Lastmeßzelle, sind aber nur feuchtigkeitsdicht, wenn die randseitigen Schnittkanten der Aluminium-Verbundfolie zusätzlich behandelt, beispielsweise mit einer aufgedampften Aluminiumnaht abgedeckt werden. Dadurch wird auch diese Art der Abdeckung ziemlich aufwendig, abgesehen davon, daß sie gegen mechanische Beschädigungen empfindlich ist und schon deswegen für viele Anwendungszwecke nicht in Betracht kommt. Außerdem bereitet die Herausführung der Kabel Schwierigkeiten.

Der Erfindung liegt die Aufgabe zugrunde, eine Wägezelle der eingangs genannten Art schaffen, die einfach aufgebaut und vergleichsweise billig herstellbar ist und die insbesondere eine sichere und technisch einfach zu realisierende Abdeckung der mit Dehnungsmeßstreifen bestückten Bereiche ermöglicht.

Diese Aufgabe wird durch die im Patentanspruch 1 angegebene Erfindung gelöst. Weiterbildungen und vorteilhafte Ausführungsbeispiele der Erfindung sind in den abhängigen Ansprüchen angegeben.

Anders als die bekannte Aluminium-Verbundfolie kann eine solche metallische Abdeckung an jede Art von mechanischer Beanspruchung angepaßt werden, so daß für den jeweiligen Einsatzzweck eine ausreichend robuste Sicherung der Dehnungsmeßstreifen erreicht werden kann. Derartige metallische Abdeckungen lassen sich einfach herstellen und leicht an die jeweilige Geometrie der Wägezelle bzw. der Dehnungsmeßstreifenanordnung anpassen. Sie lassen sich außerdem leicht so gestalten, daß sie nur einen geringen Einfluß auf die Federkennlinie der Wägezelle haben bzw. daß ihr Einfluß verhältnismäßig leicht kompensierbar ist. Die Form der Abdeckung und ihre Verbindung mit der Wägezelle kann jeweils so ausgewählt werden, daß nachteilige Rückwirkungen praktisch auszuschließen sind.

Die Verbindung der Abdeckung mit der Wägezelle kann durch Schweißen, insbesondere Laserschweißen, durch Löten oder Kleben erfolgen. In allen Fällen wird ein feuchtigkeitsdichter Abschluß der Bereiche mit Dehnungsmeßstreifen erreicht, ohne daß die mechanischen Eigenschaften der Wägezelle nennenswert beeinflußt werden. Die stabförmige Wägezelle selbst kann zwischen den endseitigen Krafteinleitungsflächen als einfaches Drehteil mit im wesentlichen gleichbleibendem, vorzugsweise gleichförmigem Querschnitt hergestellt werden und so die Forderung nach geringerem Herstellungsaufwand erfüllen. Selbstverständlich kann jedoch auch ein vieleckiger, z.B. quadratischer Querschnitt der stabförmigen Wägezelle oder von Bereichen der stabförmigen Wägezelle vorgesehen werden.

Bei einer vorteilhaften Ausführungsform der Erfindung ist vorgesehen, daß die Wägezelle etwa in der Mitte zwischen den endseitigen Krafteinleitungsflächen senkrecht zu ihrer Längsachse eine Bohrung aufweist und daß die Dehnungsmeßstreifen auf der Bohrungswandung angebracht sind. Damit ist in der Wägezelle in einfacher Weise ein geschwächter Querschnittsbereich geschaffen, der für das Anbringen der Dehnungsmeßstreifen bestens geeignet ist. Außerdem gewinnt man einen Raum, in dem die Dehnungsmeßstreifen gegen äußere mechanische Zerstörung bereits weitgehend gesichert sind. Zum Verschließen der Bohrung eignen sich einfach geformte Bleche wie tiefgezogene oder gedrückte Bleche.

Die Bohrung kann auch ohne großen Aufwand mit endseitigen Abschnitten von größerem Durchmesser versehen werden, wobei die kreisringförmigen Stirnflächen zwischen größerem und kleinerem Durchmesser als Auflage für eine kreisscheibenförmige Abdeckung dienen und eine besonders gute und leicht zu realisierende Verbindung zwischen Wägezelle und Abdeckung ermöglichen. Die Formgebung kann durch einfache spangebende Bearbeitung erfolgen und trägt dazu bei, daß die Wägezelle preisgünstig hergestellt werden kann.

Bei einer anderen Ausführungsform der Erfindung ist vorgesehen, daß die Wägezelle etwa in der Mitte zwischen den endseitigen Krafteinleitungsflächen diametral gegenüberliegende Ausnehmungen aufweist, auf deren Basisflächen die Dehnungsmeßstreifen angebracht sind und daß die Ausnehmungen von Abdeckungen verschlossen sind, die diese randseitig übergreifen und mit der Wägezelle randseitig verbunden sind. Durch die Bemessung der Ausnehmungen nach Größe und Tiefe kann jede gewünschte Querschnittschwächung der Wägezelle erreicht werden, wobei auch hier lediglich ein einfacher, preiswerter Fräs- und/oder Bohrvorgang zur Herstellung erforderlich ist. Als Abdeckung können ebene oder vorgeformte Blechabschnitte verwendet werden, die die Ausnehmung überdecken und randseitig wiederum sehr bequem mit der Wägezelle zu verbinden sind.

Schließlich kann man den Erfindungsgedanken auch bei einer im Querschnitt nicht geschwächten Wägezelle anwenden, indem die Dehnungsmeßstreifen einfach auf die vorzugsweise zylindrische Mantelfläche aufgebracht und mit einer deckelartigen, randseitig mit der Wägezelle verbundenen Abdeckung abgeschlossen sind. Bei dieser Ausführung erfordert die Wägezelle praktisch keine mechanische Bearbeitung zur Schaffung von Bereichen auf denen die Dehnungsmeßstreifen angebracht werden können. Durch entsprechende Gestaltung der Abdeckungen kann dafür gesorgt werden, daß die Dehnungsmeßstreifen gesichert werden, ohne daß die Abdeckungen mit den Dehnungsmeßstreifen in Berührung kommen.

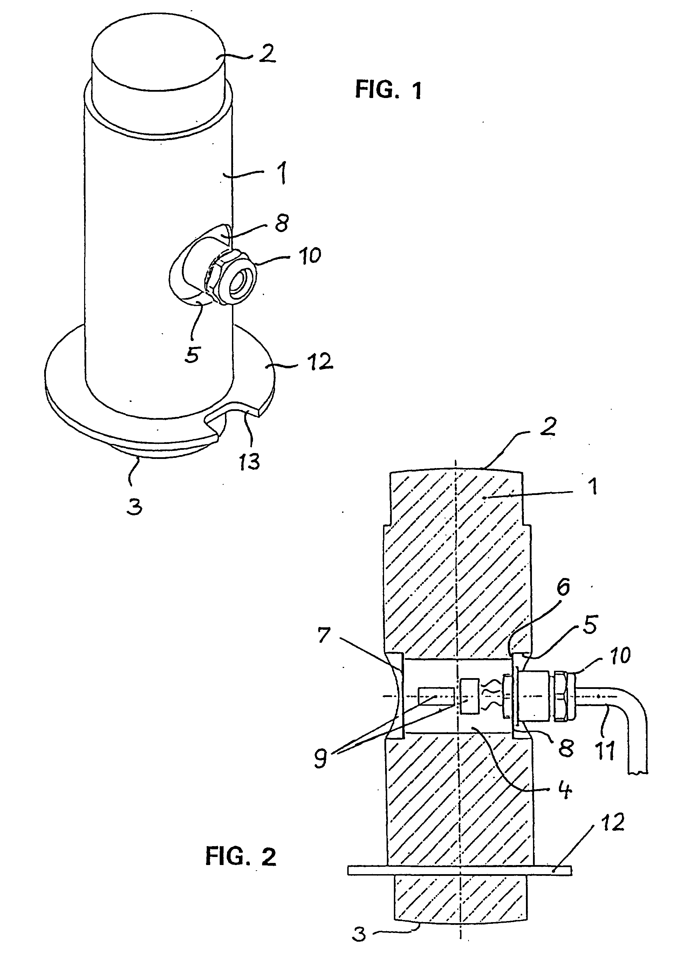

Bei den beiden letztgenannten Ausführungsformen ist es zweckmäßig, eine Querbohrung - bei Bedarf auch mehrere - vorzusehen, wodurch eine innenliegende Kabelführung zum Anschluß der Dehnungsmeßstreifen möglich und nur noch ein Kabelabgang nach außen erforderlich ist. Zu diesem Zweck weist auch eine der Abdeckungen wie bei der Ausführungsform nach den Figuren 1 und 2 einen Schraubanschluß für die Durchführung von Kabeln auf. Derartige Schraubanschlüsse sind für die verschiedensten Anwendungszwecke aus dem Stand der Technik bekannt. Ein separater Kabelkasten ist bei diesen Ausgestaltungen nicht erforderlich.

Um die Wägezelle gegen Verdrehen um ihre Längsachse zu sichern, kann erfindungsgemäß die Wägezelle eine mit einer ortsfesten Halterung zusammenwirkende ringförmige Sicherungsscheibe aufweisen, die an der Wägezelle befestigt ist.

Der Erfindungsgedanke läßt sich selbstverständlich auch bei Wägezellen anwenden, bei denen zumindest eine der Krafteinleitungsflächen eben ausgebildet ist. Die Krafteinleitungsfläche kann dabei auch mit Einrichtungen z.B. in Form von Gewindeeinrichtungen versehen sein, über die eine Verbindung der Wägezelle mit Krafteinleitungsbauteilen beispielsweise zur Aufbringung einer Zugbelastung möglich ist.

Die Erfindung wird nachfolgend anhand von Ausführungsbeispielen näher erläutert, die in der Zeichnung dargestellt sind. Es zeigen
- Figur 1: eine perspektivische Darstellung einer Wägezelle mit in einer Bohrung angeordneten Dehnungsmeßstreifen,
- Figur 2: einen Längsschnitt durch die Wägezelle gemäß Figur 1,
- Figur 3: eine Ansicht einer zylindrischen Wägezelle mit Ausnehmungen zur Aufnahme der Dehnungsmeßstreifen,
- Figur 4: einen Querschnitt durch die Wägezelle gemäß Figur 3,
- Figur 5: eine Ansicht einer zylindrischen Wägezelle mit auf der Mantelfläche angeordneten Dehnungsmeßstreifen,
- Figur 6: einen Querschnitt durch die Wägezelle gemäß Figur 5,
- Figur 7a: einen Längsschnitt durch eine Wägezelle mit Querbohrungen als Krafteinleitungsflächen,
- Figur 7b: eine perspektivische Darstellung der Wägezelle gemäß Figur 7 a,
- Figur 8a: einen Längsschnitt durch eine Wägezelle mit endseitigen Gewindebohrungen als Krafteinleitungsflächen,
- Figur 8b: eine perspektivische Darstellung der Wägezelle gemäß Figur 8a,
- Figur 9a: ein Längsschnitt durch eine Wägezelle mit endseitigen Außengewinden als Krafteinleitungsflächen und
- Figur 9b: eine perspektivische Darstellung der Wägezelle gemäß Figur 9a.

Die in den Figuren 1 und 2 dargestellte stabartige Wägezelle 1 hat eine kreiszylindrische Form mit endseitigen, sphärisch ausgebildeten Krafteinleitungsflächen 2 und 3. Sie kann jedoch auch einen vieleckigen, beispielsweise quadratischen Querschnitt aufweisen. Die diesen benachbarten Endbereiche sind durch einen kleineren Durchmesser vom Mittelteil etwas abgesetzt. In der Mitte zwischen den beiden Krafteinleitungsflächen 2 und 3 besitzt die Wägezelle 1 eine Bohrung 4 senkrecht zur Längsachse. Die Endabschnitte 5 der Bohrung 4 haben einen etwas größeren Durchmesser, wodurch kreisringförmige Stirnflächen 6 für die Auflage scheibenförmiger Abdeckungen 7, 8 gebildet sind. Innerhalb der Bohrung 4 sind die Dehnungsmeßstreifen 9 angeordnet. Die Abdeckung 8 ist mit einem Schraubanschluß 10 für die Durchführung eines Kabels 11 versehen, über das die Dehnungsmeßstreifen 9 an ein Auswertegerät anschließbar sind. Die Abdeckungen 7, 8 sind durch Schweißen dicht in der Bohrung 4 befestigt.

Zur Sicherung gegen Verdrehen der Wägezelle 1 um ihre Längsachse ist nahe der unteren Krafteinleitungfläche 3 eine mit der Wägezelle 1 fest verbundene ringförmige Scheibe 12 vorgesehen, die eine Randausnehmung 13 hat, in die in montiertem Zustand der Wägezelle 1 eine ortsfeste Halterung eingreift. Dadurch wird verhindert, daß sich die Wägezelle 1 drehen kann und der Kabelanschluß beschädigt wird.

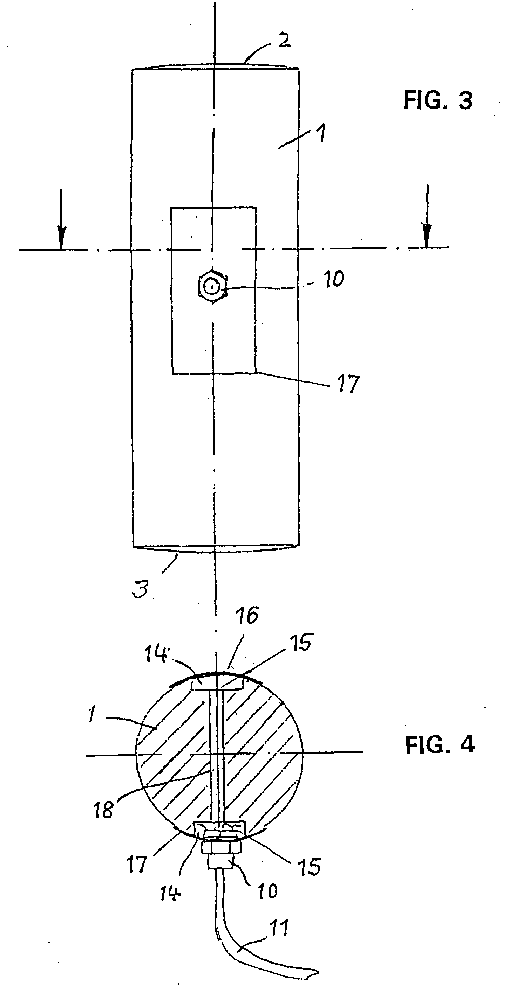

Bei der Ausführungsform gemäß den Figuren 3 und 4 ist die Wägezelle 1 zwischen den Krafteinleitungsflächen 2 und 3 durchgehend kreiszylindrisch ausgebildet. Sie weist zwei diametral angeordnete Ausnehmungen 14 auf, an deren Bodenflächen 15 Dehnungsmeßstreifen angebracht sind. Die Ausnehmungen 14 sind von Abdeckungen 16, 17 überwölbt, die der Zylinderform der Wägezelle 1 angepaßt und an ihren Rändern mit dieser verschweißt sind. Die Abdeckung 17 hat einen Schraubanschluß 10 für die Durchführung eines Kabels 11. Die Ausnehmungen 14 sind durch eine dünne, die Wägezelle 1 durchdringende Querbohrung 18 miteinander verbunden, durch die eine innenliegende Kabelverbindung geführt ist.

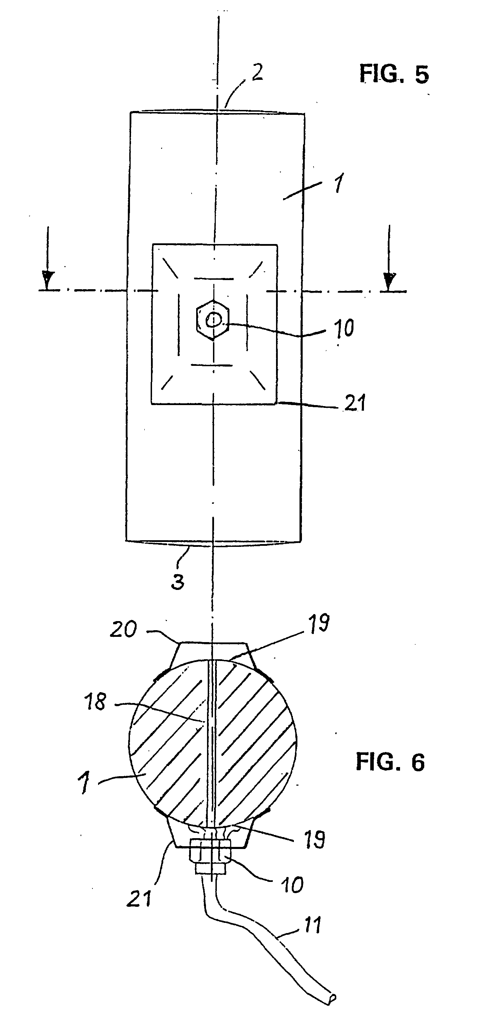

Die Ausführungsform gemäß den Figuren 5 und 6 ist besonders einfach gestaltet und in der Herstellung daher noch günstiger. Die zwischen den endseitigen Krafteinleitungsflächen 2 und 3 durchgehend kreiszylindrische Wägezelle 1 erfordert an mechanischer Formgebung nur eine Querbohrung 18, weil die Bereiche 19 für die Anbringung der Dehnungsmeßstreifen diametral auf der äußeren Mantelfläche der Wägezelle 1 vorgesehen sind. In diesem Fall sind die Abdeckungen 20, 21 haubenartig ausgebildet und an ihren Rändern durch Schweißen mit der Wägezelle 1 verbunden. Die Abdeckung 21 enthält einen Schraubanschluß 10 für die Durchführung eines Kabels 11, das über die Querbohrung 18 auch mit den Dehnungsmeßstreifen unter der anderen Abdeckung verbunden ist.

Selbstverständlich kann auch bei den Wägezellen der Figuren 3 bis 6 eine Sicherung gegen Verdrehen um die Längsachse oder ein vieleckiger, z.B. quadratischer Querschnitt vorgesehen werden.

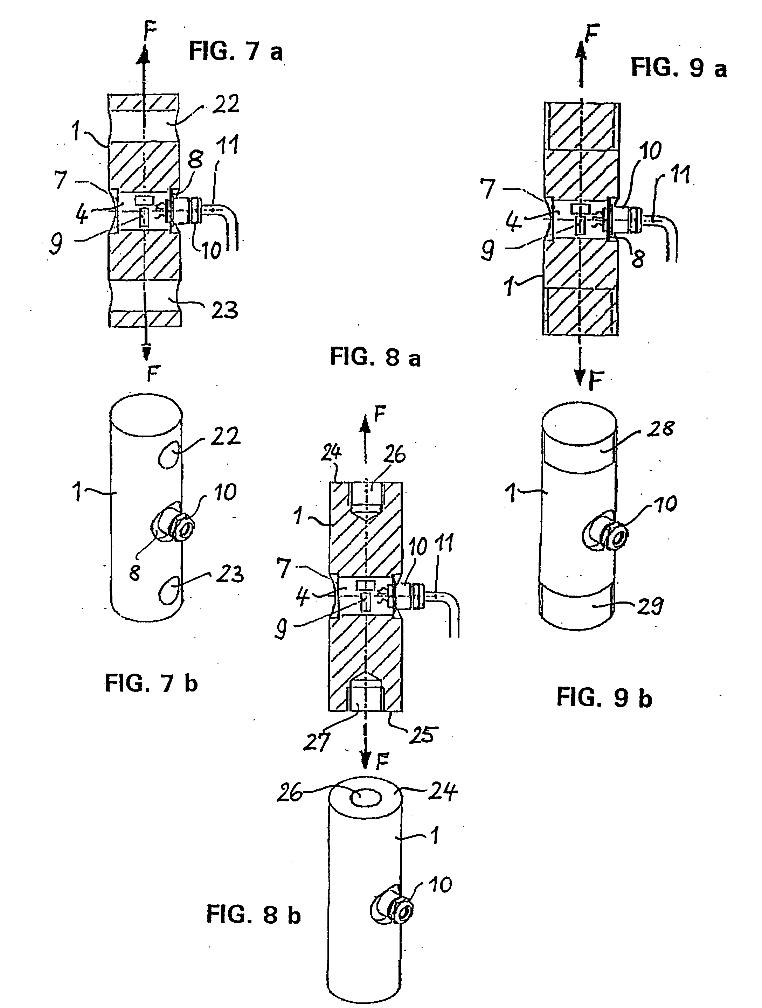

Die in den Figuren 1 bis 6 dargestellten Wägezellen sind für die Einleitung von Druckkräften bestimmt. Eine vorteilhafte Anwendung der Erfindung bei Wägezellen zur Einleitung von Zugkräften zeigen die in den Figuren 7 bis 9 dargestellten Ausführungsbeispiele. Bei diesen Ausführungsbeispielen bestehen die Wägezellen 1 aus einem kreiszylindrischen Stab, der analog zu der Wägezelle gemäß Figur 1 in seiner Mitte eine zur Zylinderachse senkrechte Bohrung 4 hat, in der die Dehnungsmeßstreifen 9 angeordnet sind. Die Bohrung 4 ist mit Abdeckungen 7, 8 verschlossen, wobei die Abdeckung 8 einen Schraubanschluß 10 zur Durchführung eines Kabels 11 aufweist.

Bei der Wägezelle gemäß den Figuren 7a, 7b werden die Krafteinleitungsflächen durch Querbohrungen 22, 23 gebildet, die in den Endabschnitten der Wägezellen 1 parallel zueinander und parallel zur Bohrung 8 angeordnet sind; sie können jedoch auch senkrecht zur Bohrung angeordnet sein. Die Querbohrungen 22, 23 dienen zur Aufnahme von Zapfen, die die Zugkräfte F auf die Wägezelle 1 übertragen.

In Figur 8 ist eine Ausgestaltung der Wägezelle 1 gezeigt, die zur Krafteinleitung in den Stirnflächen 24, 25 koaxial zur Zylinderachse Gewindebohrungen 26, 27 hat, in die zur Krafteinleitung geeignete Anschlußglieder, beispielsweise Stangen oder Gelenkköpfe einschraubbar sind.

Bei der Wägezelle gemäß den Figuren 9a, 9b sind zum Anschluß von Krafteinleitungsbauteilen die Endabschnitte der Wägezelle 1 jeweils mit einem Außengewinde 28, 29 versehen, auf das das jeweilige Krafteinleitungsbauteil aufschraubbar ist.

Alle erfindungsgemäßen Ausführungsformen sind sehr robust, in der Herstellung einfach und gegen äußere Störeinflüsse gut gesichert. Die metallischen Abdeckungen lassen sich in allen Fällen so gestalten und mit der Wägezelle verbinden, daß einerseits ein guter Schutz der empfindlichen Dehnungsmeßstreifenanordnungen erreicht wird und andererseits die von den Abdekkungen ausgehenden Einflüsse auf die Federkennlinie der Wägezelle zu vernachlässigen oder aber meßtechnisch einfach zu kompensieren sind. Schließlich sind zur Befestigung der Abdekkungen auch Verbindungsmethoden anwendbar, die sich nicht störend auf die Meßgenauigkeit auswirken. Der Kabelabgang der Wägezelle wird in äußerst einfacher Weise über eine handelsübliche dichte Kabelverschraubung bewerkstelligt, die direkt auf der Abdeckung sitzt und in Verbindung mit den üblichen Vergußmassen eine wirkungsvolle Abdichtung darstellt. Interne Verschaltungen vermeiden die aufwendigen auf das Gehäuse einer Wägezelle aufgebrachten Kabelkästen. Die erfindungsgemäßen Wägezellen sind sehr preisgünstig herstellbar und überall dort anwendbar, wo Wägeeinrichtungen mit möglichst niedrigem Kostenaufwand erstellt werden müssen.

## Patentansprüche

1. Stabförmige Wägezelle (1) oder Kraftaufnehmer für im wesentlichen in Achsrichtung aufgebrachte Belastungen mit vorzugsweise sphärisch ausgebildeten, endseitigen Krafteinleitungsflächen (2, 3), sowie mit wenigstens einem zwischen den endseitigen Krafteinleitungsflächen (2, 3) angeordneten Bereich zum Anbringen von Dehnungsmeßstreifen (9), der unter einer metallischen Abdeckung (7, 8; 16, 17; 20, 21) liegt, die sich nur über einen kleineren Teil des Umfangs der Wägezelle (1) erstreckt und die randseitig mit der Wägezelle (1) abdichtend verbunden ist, **dadurch gekennzeichnet, daß** die Dehnungsmeßstreifen (9) unmittelbar am stabförmigen Wägezellenkörper (1) angebracht sind und daß die Abdeckung (7, 8; 16, 17; 20, 21) von den Dehnungsmeßstreifen (9) einen radialen Abstand aufweisen.

2. Wägezelle nach Anspruch 1, **dadurch gekennzeichnet, daß** die Abdeckung (7, 8; 16, 17; 20, 21) durch Schweißen, insbesondere Laser-schweißen mit der Wägezelle (1) verbunden ist.

3. Wägezelle nach Anspruch 1, **dadurch gekennzeichnet, daß** die Abdeckung (7, 8; 16, 17; 20, 21) durch Löten mit der Wägezelle (1) verbunden ist.

4. Wägezelle nach Anspruch 1, **dadurch gekennzeichnet, daß** die Abdeckung (7, 8; 16, 17; 20, 21) durch Kleben mit der Wägezelle (1) verbunden ist.

5. Wägezelle nach einem der Ansprüche 1 bis 4, **dadurch gekennzeichnet, daß** die stabförmige Wägezelle (1) zwischen den endseitigen Krafteinleitungsflächen (2, 3) einen im wesentlichen gleichbleibenden Querschnitt aufweist.

6. Wägezelle nach Anspruch 5, **dadurch gekennzeichnet, daß** die Wägezelle (1) einen kreisförmigen oder vieleckigen Querschnitt aufweist.

7. Wägezelle nach einem der Ansprüche 1, 5 oder 6, **dadurch gekennzeichnet, daß** die Wägezelle (1) etwa in der Mitte zwischen den endseitigen Krafteinleitungsflächen (2, 3) senkrecht zu ihrer Längsachse eine Bohrung (4) aufweist und daß die Dehnungsmeßstreifen (5) auf der Bohrungswandung angebracht sind.

8. Wägezelle nach Anspruch 7, **dadurch gekennzeichnet, daß** die Bohrung (4) Endabschnitte (5) mit größerem Durchmesser aufweist, daß scheibenförmig oder napfförmig ausgebildete, metallische Abdeckungen (7, 8) in den Endabschnitten (5) angeordnet sind und auf den kreisringförmigen Stirnflächen (6) zwischen dem größeren und dem kleineren Durchmesser der Bohrung (4) aufliegen und an ihrem Rand mit der Wägezelle (1) verbunden sind.

9. Wägezelle nach Anspruch 1, 5 oder 6, **dadurch gekennzeichnet, daß** die Wägezelle (1) etwa in der Mitte zwischen den endseitigen Krafteinleitungsflächen (2, 3) diametral angeordnete Ausnehmungen (14) aufweist, auf deren Basisflächen (15) die Dehnungsmeßstreifen angebracht sind und daß die Ausnehmungen (14) von Abdeckungen (16, 17) verschlossen sind, die diese übergreifen und an ihrem Rand mit der Wägezelle (1) verbunden sind.

10. Wägezelle nach Anspruch 1, 5 oder 6, **dadurch gekennzeichnet, daß** die Dehnungsmeßstreifen (5) etwa in der Mitte zwischen den endseitigen Krafteinleitungsflächen (1, 2) diametral auf der Mantelfläche der Wägezelle (1) angebracht sind und daß die mit Dehnungsmeßstreifen versehenen Bereiche (19) mittels einer deckelartigen, an den Rändern mit der Wägezelle (1) verbundenen Abdeckung (20, 21) abgeschlossen sind.

11. Wägezelle nach Anspruch 9 oder 10, **dadurch gekennzeichnet, daß** die Ausnehmungen (14) bzw. die Bereiche (19) mit Dehnungsmeßstreifen durch eine dünne Querbohrung (18) zur Durchführung von Kabeln untereinander verbunden sind.

12. Wägezelle nach einem der Ansprüche 1 bis 11, **dadurch gekennzeichnet, daß** eine Abdeckung (8, 17, 21) einen Schraubanschluß (10) für die Durchführung eines Kabels (11) aufweist.

13. Wägezelle nach einem der Ansprüche 1 bis 12, **dadurch gekennzeichnet, daß** die Wägezelle (1) eine mit einer ortsfesten Halterung zusammenwirkende Sicherung gegen Verdrehen um ihre Längsachse aufweist.

14. Wägezelle nach einem der Ansprüche 1 bis 13, **dadurch gekennzeichnet, daß** zumindest eine der Krafteinleitungsflächen eben ausgebildet ist.

15. Wägezelle nach Anspruch 14, **dadurch gekennzeichnet, daß** die Krafteinleitungsfläche mit Einrichtungen, vorzugsweise Gewindeeinrichtungen, zur Verbindung mit Krafteinleitungsbauteilen versehen ist.

## Claims

1. Rod-shaped load cell (1) or force transducer for substantially axially applied loads having preferably spherically designed force introduction end faces (2, 3), as well as having at least one region for mounting strain gauges (9), which is disposed between the force introduction end faces (2, 3) and lies under a metal cover (7, 8; 16, 17; 20, 21), which extends only over a minor part of the periphery of the load cell (1) and which at the edge is connected sealingly to the load cell (1), **characterized in that** the strain gauges (9) are mounted directly on the rod-shaped load cell body (1) and that the cover (7, 8; 16, 17; 20, 21) are at a radial distance from the strain gauges (9).

2. Load cell according to claim 1, **characterized in that** the cover (7, 8; 16, 17; 20, 21) is connected by welding, in particular laser welding, to the load cell (1).

3. Load cell according to claim 1, **characterized in that** the cover (7, 8; 16, 17; 20, 21) is connected by soldering to the load cell (1).

4. Load cell according to claim 1, **characterized in that** the cover (7, 8; 16, 17; 20, 21) is connected by gluing to the load cell (1).

5. Load cell according to one of claims 1 to 4, **characterized in that** the rod-shaped load cell (1) between the force introduction end faces (2, 3) has a substantially constant cross section.

6. Load cell according to claim 5, **characterized in that** the load cell (1) has a circular or polygonal cross section.

7. Load cell according to one of claims 1, 5 or 6, **characterized in that** the load cell (1) approximately in the middle between the force introduction end faces (2, 3) and at right angles to its longitudinal axis has a bore (4) and that the strain gauges (5) are mounted on the bore wall.

8. Load cell according to claim 7, **characterized in that** the bore (4) has end portions (5) of larger diameter, that disk-shaped or cup-shaped metal covers (7, 8) are disposed in the end portions (5) and are supported against the annular end faces (6) between the larger and the smaller diameter of the bore (4) and are connected at their edge to the load cell (1).

9. Load cell according to claim 1, 5 or 6, **characterized in that** the load cell (1) approximately in the middle between the force introduction end faces (2, 3) has diametrically disposed recesses (14), on the base surfaces (15) of which the strain gauges are mounted, and that the recesses (14) are closed by covers (16, 17), which overlap said recesses and are connected at their edge to the load cell (1).

10. Load cell according to claim 1, 5 or 6, **characterized in that** the strain gauges (5) are mounted approximately in the middle between the force introduction end faces (1, 2) diametrically on the lateral surface of the load cell (1) and that the regions (19) provided with strain gauges are closed off by means of a lid-like cover (20, 21), which is connected at the edges to the load cell (1).

11. Load cell according to claim 9 or 10, **characterized in that** the recesses (14) and/or the regions (19) having strain gauges are connected to one another by a narrow transverse bore (18) for the passing through of cables.

12. Load cell according to one of claims 1 to 11, **characterized in that** one cover (8, 17, 21) has a screw-type connection (10) for the passing through of a cable (11).

13. Load cell according to one of claims 1 to 12, **characterized in that** the load cell (1) has a device, which locks the load cell against rotation about its longitudinal axis and cooperates with a stationary holding device.

14. Load cell according to one of claims 1 to 13, **characterized in that** at least one of the force introduction faces is flat.

15. Load cell according to claim 14, **characterized in that** the force introduction face is provided with devices, preferably threaded devices, for connection to force introduction components.

## Revendications

1. Cellule de pesée (1) en forme de barre ou capteur de force pour des charges appliquées sensiblement dans la direction axiale, comportant de préférence des surfaces d'introduction de force (2, 3) terminales, de préférence sphériques, ainsi qu'au moins une zone, qui est disposée entre les surfaces d'introduction de force (2, 3) terminales, pour la fixation de jauges d'allongement (9), et qui se situe sous une pièce de recouvrement (7, 8 ; 16, 17 ; 20, 21) métallique qui s'étend seulement sur une petite partie du pourtour de la cellule de pesée (1) et qui est reliée, sur les bords, de manière étanche, à la cellule de pesée (1), **caractérisée en ce que** les jauges d'allongement (9) sont placées directement sur le corps (1) en forme de barre de la cellule de pesée et **en ce que** la pièce de recouvrement (7, 8 ; 16, 17 ; 20, 21) présente une distance radiale par rapport aux jauges d'allongement (9).

2. Cellule de pesée selon la revendication 1, **caractérisée en ce que** la pièce de recouvrement (7, 8 ; 16, 17 ; 20, 21) est reliée à la cellule de pesée (1) par soudage, en particulier soudage au laser.

3. Cellule de pesée selon la revendication 1, **caractérisée en ce que** la pièce de recouvrement (7, 8 ; 16, 17 ; 20, 21) est reliée à la cellule de pesée (1) par brasage.

4. Cellule de pesée selon la revendication 1, **caractérisée en ce que** la pièce de recouvrement (7, 8 ; 16, 17 ; 20, 21) est reliée à la cellule de pesée (1) par collage.

5. Cellule de pesée selon l'une des revendications 1 à 4, **caractérisée en ce que** la cellule de pesée (1) en forme de barre présente une section transversale sensiblement constante entre les surfaces d'introduction de force (2, 3) terminales.

6. Cellule de pesée selon la revendication 5, **caractérisée en ce que** la cellule de pesée (1) présente une section transversale circulaire ou polygonale.

7. Cellule de pesée selon l'une des revendications 1, 5 ou 6, **caractérisée en ce que** la cellule de pesée (1) présente un perçage (4) approximativement au milieu entre les surfaces d'introduction de force (2, 3) terminales, perpendiculairement à son axe longitudinal, et **en ce que** les jauges d'allongement (5) sont placées sur la paroi du perçage.

8. Cellule de pesée selon la revendication 7, **caractérisée en ce que** le perçage (4) présente une partie terminale (5) de plus grand diamètre, **en ce que** les pièces de recouvrement (7, 8) métalliques, en forme de disques ou de godets sont disposées dans les parties terminales (5) et reposent sur les surfaces frontales (6) en anneau de cercle entre le plus grand diamètre et le plus petit diamètre du perçage (4), et sont reliées à la cellule de pesée (1) sur leur bord.

9. Cellule de pesée selon la revendication 1, 5 ou 6, **caractérisée en ce que** la cellule de pesée (1) présente, approximativement au milieu entre les surfaces d'introduction de force (2, 3) terminales, des évidements (14) disposés diamétralement sur les surfaces de base (15) desquels sont placées les jauges d'allongement, et **en ce que** les évidements (14) sont fermés par des pièces de recouvrement (16, 17) qui passent sur ceux-ci et qui sont reliées à la cellule de pesée (1), sur leur bord.

10. Cellule de pesée selon la revendication 1, 5 ou 6, **caractérisée en ce que** les jauges d'allongement (5) sont placées diamétralement sur la surface d'enveloppe de la cellule de pesée (1), approximativement au milieu entre les surfaces d'introduction de force (1, 2) terminales, et **en ce que** les zones (19) pourvues des jauges d'allongement sont fermées au moyen d'une pièce de recouvrement (20, 21) de type couvercle, reliée à la cellule de pesée (1), sur les bords.

11. Cellule de pesée selon la revendication 9 ou 10, **caractérisée en ce que** les évidements (14) ou les zones (19) avec les jauges d'allongement sont reliés entre eux par un perçage transversal (18) étroit, pour le passage de câbles.

12. Cellule de pesée selon l'une des revendications 1 à 11, **caractérisée en ce qu'**une pièce de recouvrement (8, 17, 21) comporte un raccord à vis (10) pour le passage d'un câble (11).

13. Cellule de pesée selon l'une des revendications 1 à 12, **caractérisée en ce que** la cellule de pesée (1) comporte un blocage contre une rotation autour de son axe longitudinal, qui coopère avec une fixation fixe.

14. Cellule de pesée selon l'une des revendications 1 à 13, **caractérisée en ce qu'**au moins l'une des surfaces d'introduction de force est plane.

15. Cellule de pesée selon la revendication 14, **caractérisée en ce que** la surface d'introduction de force est pourvue de dispositifs, de préférence de dispositifs filetés, pour la liaison avec des composants d'introduction de force.
